Europäisches Patentamt

European Patent Office

Office européen des brevets

(19)

(11) Veröffentlichungsnummer : **0 468 926 A1**

(12)
# EUROPÄISCHE PATENTANMELDUNG

(21) Anmeldenummer : **91810581.8**

(22) Anmeldetag : **18.07.91**

(51) Int. Cl.⁵ : **A61C 17/08,** A61M 1/00, A61M 27/00

(30) Priorität : **25.07.90 CH 2457/90**

(43) Veröffentlichungstag der Anmeldung :
**29.01.92 Patentblatt 92/05**

(84) Benannte Vertragsstaaten :
**AT BE CH DE DK ES FR GB GR IT LI LU NL SE**

(71) Anmelder : **Herbst, Jean**
**Drusbergstrasse 53**
**CH-8053 Zürich (CH)**

(72) Erfinder : **Herbst, Jean**
**Drusbergstrasse 53**
**CH-8053 Zürich (CH)**

(74) Vertreter : **White, William et al**
**PATENTANWALTS-BUREAU ISLER AG**
**Postfach 6940**
**CH-8023 Zürich (CH)**

(54) **Absaugvorrichtung für Speichel oder andere Körperflüssigkeiten.**

(57)    Damit ein Festsaugen der Absaugdüse bei zahnärztlichen Absaugvorrichtungen für Speichel verhindert wird, ist ein Körper (1) aus einem offenporigen, feuchtigkeitsaufnehmendem Kunststoff vorhanden, der von Absaugbohrungen (41, 42) durchdrungen ist. Die Absaugbohrungen (41, 42) kommunizieren mit einer Hauptbohrung (46) in die der Absaugschlauch (3) eingesetzt ist. Dadurch, dass der Körper (1) selbst Flüssigkeit aufnimmt, wird durch die Absaugpumpe nur diese Flüssigkeit angesaugt und ein Festsaugen auf der Mundschleimhaut ist nicht möglich.

EP 0 468 926 A1

Fig. 2

Die vorliegende Erfindung betrifft eine Absaugvorrichtung gemäss Oberbegriff des unabhängigen Patentanspruchs 1.

Es sind Absaugvorrichtungen für zahnärztliche Verrichtungen in vielfältiger Ausführungsform bekannt. Sie bestehen aus einem gekrümmten Rohr mit einer Saugdüse am einen Ende und einem Schlauchanschluss am anderen Ende. Das Rohr kann aus Metall bestehen oder als Wegwerfartikel aus Kunststoff mit eingelegtem Spreizdraht gefertigt sein. Der Draht ist meistens schraubenförmig ausgebildet, so dass ein solches Mundstück in jede geeignete Form gebogen werden kann.

Die bekannten veröffentlichten Patente und Patentanmeldungen befassen sich mit der Verminderung des Sauggeräusches, das durch die Pumpe im Speichelsumpf erzeugt wird. Als Beispiel einer solchen Veröffentlichung wird hier die DE-A-37 34 762 genannt.

Neben dem unangenehmen Geräusch tritt aber auch das Festsaugen an der Haut in Erscheinung, was meist schmerzhaft ist. Bis heute ist noch keine solche Vorrichtung bekannt geworden, die das Festsaugen wirksam verhindern kann.

Demgemäss ist es eine Aufgabe der Erfindung, eine Absaugvorrichtung zu schaffen, bei der ein Festsaugen nicht möglich ist.

Erfindungsgemäss wird dies mit einer Absaugvorrichtung mit den Merkmalen im kennzeichnenden Teil des unabhängigen Patentanspruchs 1 erreicht.

Nachfolgend wird ein Ausführungsbeispiel der Erfindung an Hand der Zeichnung erläutert. Es zeigen:

Fig. 1 eine perspektivische Darstellung der erfindungsgemässen Absaugvorrichtung, und

Fig. 2 eine perspektivische Darstellung des Systems der Kanäle in der Vorrichtung nach Fig. 1.

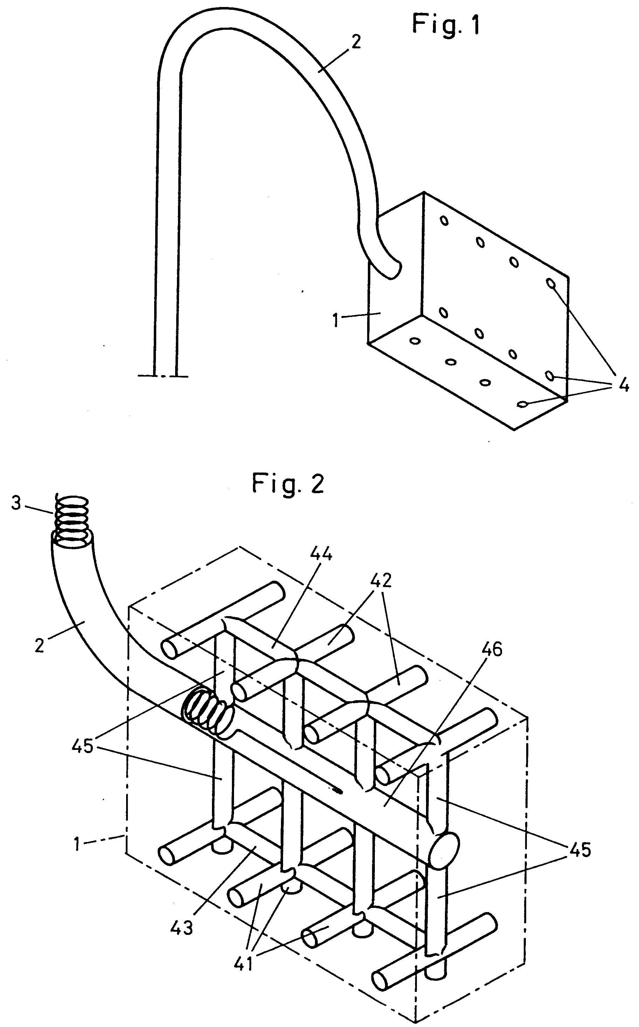

Die Absaugvorrichtung nach Fig. 1 besteht im wesentlichen aus einem Absaugkörper 1 und einem in diesen Absaugkörper 1 eindringendes Absaugrohr 2, der in seinem Innern einen schraubenförmig gewundenen Spreizdraht 3 besitzt. Der Absaugkörper 1 besitzt mehrere Absaugbohrungen, von denen zwei parallele Reihen Oeffnungen 4 an der Aussenfläche des Körpers 1 ersichtlich sind.

Der Absaugkörper 1 kann wie dargestellt prismatisch ausgebildet sein. Er könnte aber ebensogut zylindrisch mit kreisförmiger - oder elliptischer Grundfläche ausgebildet sein.

Die Anordnung der Absaugbohrungen 41, 42 ist aus Fig. 2 ersichtlich. Es sind zwei Scharen paralleler Durchgangsbohrungen 41, 42 vorhanden, die untereinander, in jeder Ebene für sich, mit Zusammenführleitungen 43, 44 verbunden sind. Jede Durchgangsbohrung 41 der einen Schar ist mit einer entsprechenden Durchgangsbohrung 42 der andern Schar über Ableitbohrungen 45 verbunden. Alle Ableitbohrungen 45 münden in eine Hauptbohrung 46, die zur Aufnahme des Absaugschlauches 2 ausgebildet ist. Der Spreizdraht 3 kann aus dem Ende des Absaugschlauches 2 herausragen, um sich im Körper 1 zu verankern.

Der Körper 1 besteht aus einem offenporigen wasseraufnehmenden Kunststoff. Solche Kunststoffe sind bekannt, als ein Beispiel sei hier z.B. Polyurethan genannt.

Ein solcherart ausgebildeter Körper 1 hat die Eigenschaft, sich mit Flüssigkeit vollzusaugen. Mittels der Absaugbohrungen 41, 42 und der Ableitbohrungen 45 wird somit die im Körper 1 gespeicherte Flüssigkeit abgesaugt und es wirkt keine oder eine nur sehr geringe Saugkraft auf die Schleimhaut. Ein Festsaugen ist damit verunmöglicht.

Obwohl das Ausführungsbeispiel für zahnärztliche Vorrichtungen geschaffen wurde, wäre es denkbar, solche oder ähnliche Körper auch in medizinischen Bereichen anzuwenden, wie beispielsweise Wunddrainage bei Operationen oder bei postoperativen Drainagen.

Es ist auch denkbar, dass die Ableitbohrungen 45, wie in Fig. 2 dargestellt, wenigstens auf einer Seite des Körpers 1 als Absaugbohrungen 47 ausgebildet sind.

## Patentansprüche

1. Absaugvorrichtung für Speichel oder andere Körperflüssigkeiten, mit einem Absaugschlauch (2) aus einem Kunststoffrohr mit eingelegtem Versteifungsdraht, dadurch gekennzeichnet, dass der Absaugschlauch (2) in einem quader- oder zylinderförmigen Körper (1) eingesetzt ist, welcher Körper (1) mit durchgehenden Absaugbohrungen (41, 42) versehen ist, und dass der Absaugschlauch (2) in eine Hauptbohrung (46) eingesetzt ist, mit der sämtliche Absaugbohrungen (41, 42) kommunizieren.

2. Vorrichtung nach Patentanspruch 1, dadurch gekennzeichnet, dass im Körper (1) die Absaugbohrungen (41, 42) in mehreren parallelen Ebenen angeordnet sind, und dass sämtliche Absaugbohrungen (41, 42) mittels Ableitbohrungen (45) mit der Hauptbohrung (46) verbunden sind.

3. Vorrichtung nach Patentanspruch 2, dadurch gekennzeichnet, dass die Ableitbohrungen (45) senkrecht zu den Absaugbohrungen (41, 42) angeordnet sind.

4. Vorrichtung nach Patentanspruch 3, dadurch gekennzeichnet, dass die Ableitbohrungen (45) wenigstens auf der unteren Seite des Körpers (1) als Absaugbohrungen (47) ausgebildet sind.

5. Vorrichtung nach einem der Patentansprüche 1 bis 4, dadurch gekennzeichnet, dass der Körper (1) aus einem offenporigen, feuchtigkeitsaufnehmendem Kunststoff besteht.

Fig. 1

Fig. 2

))) Europäisches
Patentamt

**EUROPÄISCHER RECHERCHENBERICHT**

Nummer der Anmeldung

| | EINSCHLÄGIGE DOKUMENTE | | | EP 91810581.8 |

| Kategorie | Kennzeichnung des Dokuments mit Angabe, soweit erforderlich, der maßgeblichen Teile | Betrifft Anspruch | KLASSIFIKATION DER ANMELDUNG (Int Cl⁵) |
|---|---|---|---|
| X | US - A - 4 158 916 (ADLER) * Spalte 1, 3. Absatz; Ansprüche; Fig. * -- | 1,5 | A 61 C 17/08 A 61 M 1/00 G 61 M 27/00 |
| X | US - A - 4 233 025 (LARSON et al.) * Spalte 1, 4. Absatz; Anspruch 1; Fig. 3 * -- | 1 | |
| D,A | DE - A1 - 3 734 762 (MANTEL) * Spalte 1, 2. Absatz * ---- | 1 | |
| | | | RECHERCHIERTE SACHGEBIETE (Int. Cl⁵) |
| | | | A 61 C A 61 M |

Der vorliegende Recherchenbericht wurde für alle Patentansprüche erstellt.

| Recherchenort WIEN | Abschlußdatum der Recherche 12-09-1991 | Prüfer MARCHART |
|---|---|---|